# EUROPEAN PATENT APPLICATION

(11) **EP 4 331 992 A1**
(43) Date of publication of application: **06.03.2024**
(21) Application number: 23194961.1
(22) Date of filing: 01.09.2023
(51) Int. Cl.: B64D 15/02, B64D 33/02, F02C 7/04

(54) **THERMAL ANTI-ICING SYSTEM FOR AN AIRCRAFT PROPULSION SYSTEM**

(30) Priority: 02.09.2022 IN 202211050198
(71) Applicant: Rohr, Inc., Chula Vista, CA 91910-2098 (US)
(72) Inventor: NAYAK, PramodaKumar, 560067 Bangalore (IN); SAYA, Ashok Babu, 560066 Bangalore (IN)
(74) Representative: Dehns

(57) **Abstract**

An assembly (54) is provided for an aircraft propulsion system (20). This assembly (54) includes a nacelle inlet structure (34) and a nozzle (122). The nacelle inlet structure (34) extends circumferentially about an axial centerline (28). The nacelle inlet structure (34) includes an inlet lip (60), a bulkhead (64) and an internal cavity (90) formed by and axially between the inlet lip (60) and the bulkhead (64). The nozzle (122) is configured to direct gas into the internal cavity (90) axially towards the bulkhead (64).

## Description

### BACKGROUND

### 1. Technical Field

This disclosure relates generally to an aircraft propulsion system and, more particularly, to a thermal anti-icing system for the aircraft propulsion system.

### 2. Background Information

A nacelle for an aircraft propulsion system may include an anti-icing system for reducing / preventing ice accumulation on an inlet lip of the nacelle. A typical anti-icing system includes a nozzle for injecting compressor bleed air into a cavity (e.g., a D-duct) within the inlet lip. Various types and configurations of such thermal anti-icing system and nozzles are known in the art. While these known systems and nozzles have various benefits, there is still room in the art for improvement. In particular, there is need in the art for a thermal anti-icing system capable of reducing hot spots on the inlet lip.

### SUMMARY OF THE DISCLOSURE

According to an aspect of the present disclosure, an assembly is provided for an aircraft propulsion system. This assembly includes a nacelle inlet structure and a nozzle. The nacelle inlet structure extends circumferentially about an axial centerline. The nacelle inlet structure includes an inlet lip, a bulkhead and an internal cavity formed by and axially between the inlet lip and the bulkhead. The nozzle is configured to direct gas into the internal cavity axially towards the bulkhead.

According to another aspect of the present disclosure, another assembly is provided for an aircraft propulsion system. This assembly includes a nacelle inlet structure and a nozzle. The nacelle inlet structure extends circumferentially about an axial centerline. The nacelle inlet structure includes an inlet lip, a bulkhead and an internal cavity formed by and axially between the inlet lip and the bulkhead. The bulkhead includes a forward section and an aft section. The forward section is located axially between a leading edge of the inlet lip and the aft section. The aft section extends circumferentially about the axial centerline between opposing circumferential ends of the forward section. The nozzle is configured to direct gas into the internal cavity.

According to still another aspect of the present disclosure, another assembly is provided for an aircraft propulsion system. This assembly includes an inlet lip, a bulkhead and a thermal anti-icing system. The inlet lip extends circumferentially about an axial centerline. The bulkhead extends circumferentially about the axial centerline. The bulkhead is configured with the inlet lip to form an internal cavity axially between the inlet lip and the bulkhead. The recess projects axially into the bulkhead away from the inlet lip. The thermal anti-icing system includes a nozzle configured to direct a stream of gas into the internal cavity along a trajectory aimed axially towards the recess.

The following optional features may be applied to any of the above aspects:
A recess may extend axially into the bulkhead from the forward section to the aft section.

The bulkhead may include: a stepped transition between the aft section and the forward section at a circumferential first end of the aft section; and/or a sloped transition between the aft section and the forward section at a circumferential second end of the aft section.

The nozzle may be configured to direct the gas into the internal cavity along a trajectory aimed axially towards the aft section.

The nozzle may include a nozzle port with a nozzle orifice. The nozzle port may be configured to direct a stream of the gas into the internal cavity through the nozzle orifice along a trajectory that is coincident with a bulkhead plane defined by the bulkhead.

The nozzle may also include a second nozzle port with a second nozzle orifice. The second nozzle port may be configured to direct a second stream of the gas into the internal cavity through the second nozzle orifice along a second trajectory that is coincident with the bulkhead plane.

The second trajectory may be parallel with the trajectory.

The trajectory may be coincident with the bulkhead plane at a first location a first distance from the nozzle. The second trajectory may be coincident with the bulkhead plane at a second location a second distance from the nozzle that is different than the first distance.

The nozzle may also include a conduit projecting longitudinally along a longitudinal centerline out from the bulkhead into the internal cavity. The nozzle port and the second nozzle port may be disposed at different locations longitudinally along the conduit.

The nozzle may also include a third nozzle port with a third nozzle orifice. The third nozzle port may be configured to direct a third stream of the gas into the internal cavity through the third nozzle orifice along a third trajectory that is coincident with the bulkhead plane.

The nozzle may include a nozzle port with a nozzle orifice. The nozzle port may be configured to aim a stream of the gas directed into the internal cavity through the nozzle orifice axially towards the bulkhead.

The bulkhead may include an axial recess. The nozzle may be configured to direct the gas into the internal cavity along a trajectory coincident with the axial recess.

The axial recess may be circumferentially spaced from the nozzle.

The axial recess may extend partially circumferentially about the axial centerline between a circumferential first end and a circumferential second end.

The bulkhead may have an axial step at a circumferential end of the axial recess.

The bulkhead may have an axial taper at a circumferential end of the axial recess.

The bulkhead may include a first section, a second section and a pocket. The second section may extend circumferentially about the axial centerline between opposing ends of the first section. The pocket may extend axially into the bulkhead from the first section to the second section.

The inlet lip may include an inner lip skin and an outer lip skin. The internal cavity may extend axially along the axial centerline between a forward end of the inlet lip and the bulkhead. The internal cavity may extend radially between the inner lip skin and the outer lip skin. The internal cavity may extend circumferentially about the axial centerline.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side illustration of an aircraft propulsion system.
FIG. 2 is a partial side sectional illustration of an assembly for the aircraft propulsion system with a portion of a thermal anti-icing system schematically shown.
FIG. 3 is a perspective illustration of a bulkhead with a nozzle for the thermal anti-icing system.
FIG. 4 is a sectional illustration of an upstream section of the bulkhead taken along line 4-4 in FIG. 3.
FIG. 5 is a sectional illustration of a downstream section of the bulkhead taken along line 5-5 in FIG. 3.
FIG. 6 is a sectional illustration of a substantially stepped transition between the upstream section and the downstream section.
FIG. 7 is a sectional illustration of a sloped transition between the downstream section and the forward section.
FIG. 8 is a schematic cross-sectional illustration of a portion of the aircraft propulsion system assembly.
FIG. 9 is a side sectional illustration of a portion of the aircraft propulsion system assembly with a gas source for the thermal anti-icing system schematically shown.
FIG. 10 is a partial perspective illustration of the nozzle arranged with the bulkhead.
FIG. 11 is a schematic illustration of the nozzle directing gas into a portion of an internal cavity of the aircraft propulsion system assembly.

### DETAILED DESCRIPTION

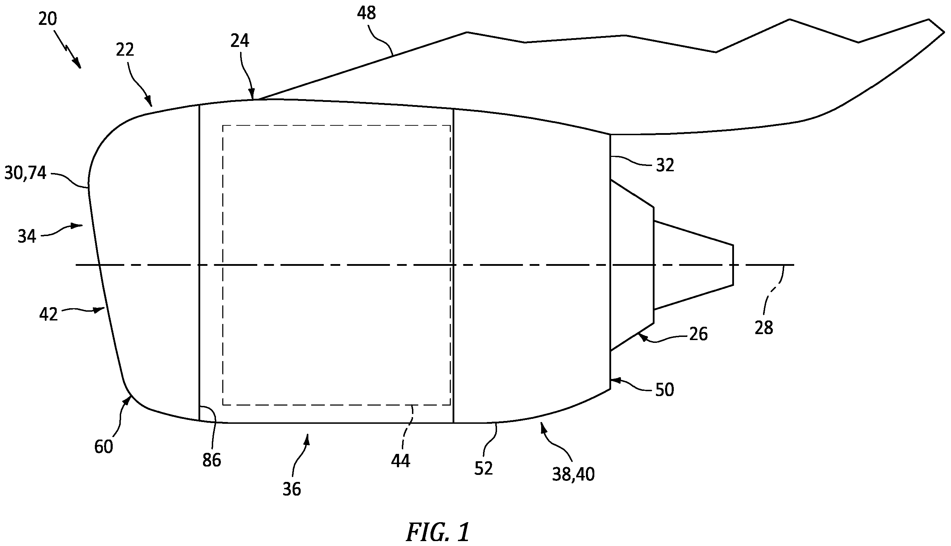

FIG. 1 illustrates an aircraft propulsion system 20 for an aircraft such as, but not limited to, a commercial airliner or a cargo plane. The aircraft propulsion system 20 includes a nacelle 22 and a gas turbine engine. This gas turbine engine may be configured as a high-bypass turbofan engine. Alternatively, the gas turbine engine may be configured as a turbojet engine or any other type of gas turbine engine capable of propelling the aircraft during flight.

The nacelle 22 is configured to house and provide an aerodynamic cover for the gas turbine engine. The nacelle 22 of FIG. 1, for example, includes a nacelle outer structure 24 and a nacelle inner structure 26; e.g., an inner fixed structure (IFS).

The outer structure 24 extends axially along an axial centerline 28 between an upstream, forward end 30 of the outer structure 24 and a downstream, aft end 32 of the outer structure 24. Briefly, the axial centerline 28 may be an axial centerline of the nacelle 22 and/or the gas turbine engine, and/or a rotational axis for one or more rotating components (e.g., spools) of the gas turbine engine. The outer structure 24 of FIG. 1 includes a nacelle inlet structure 34, one or more fan cowls 36 (one cowl visible in FIG. 1) and a nacelle aft structure 38, which may be configured as part of or include a thrust reverser system 40. However, in other embodiments, the aircraft propulsion system 20 may be configured without the thrust reverser system 40.

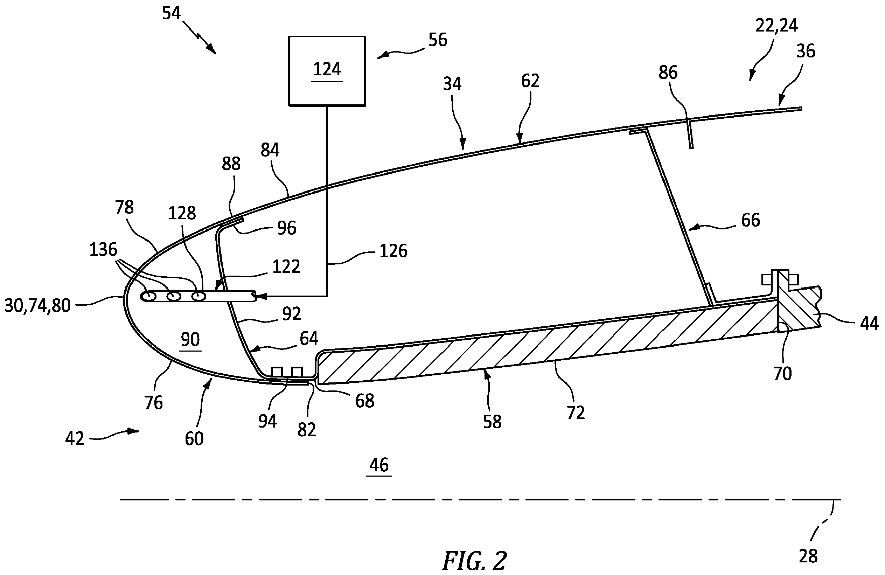

The inlet structure 34 is disposed at the nacelle forward end 30. The inlet structure 34 is configured to direct a stream of air through an inlet opening 42 (see also FIG. 2) at the nacelle forward end 30 into the aircraft propulsion system 20 and towards a fan section of the gas turbine engine.

The fan cowls 36 are disposed axially between the inlet structure 34 and the aft structure 38. Each fan cowl 36 of FIG. 1, in particular, is disposed at an aft end of a stationary portion of the nacelle 22, and each fan cowl 36 extends forward to the inlet structure 34. Each fan cowl 36 is generally axially aligned with the fan section of the gas turbine engine. The fan cowls 36 are configured to provide an aerodynamic covering for a fan case 44, which fan case 44 circumscribes a fan rotor within the fan section and may partially form an outer peripheral boundary of a flowpath 46 (see FIG. 2) of the aircraft propulsion system 20.

The term "stationary portion" is used above to describe a portion of the nacelle 22 that is stationary during propulsion system operation (e.g., during aircraft takeoff, aircraft flight and aircraft landing). However, the stationary portion may be otherwise movable for inspection / maintenance of the aircraft propulsion system 20; e.g., when the aircraft propulsion system 20 is non-operational. Each of the fan cowls 36, for example, may be configured to provide access to components of the gas turbine engine such as the fan case 44 and/or peripheral equipment arranged with the fan case 44 for inspection, maintenance and/or otherwise. In particular, each of the fan cowls 36 may be pivotally mounted with the aircraft propulsion system 20 (e.g., to a pylon structure 48) by, for example, a pivoting hinge system. The present disclosure, however, is not limited to the foregoing fan cowl configurations and/or access schemes.

The aft structure 38 of FIG. 1 is disposed at the nacelle aft end 32. The aft structure 38 is configured to form a bypass exhaust 50 for a bypass flowpath with the inner structure 26. The aft structure 38 may include one or more translating sleeves 52 (one sleeve visible in FIG. 1) for the thrust reverser system 40. The present disclosure, however, is not limited to such a translating sleeve thrust reverser system.

FIG. 2 illustrates an assembly 54 for the aircraft propulsion system 20. This propulsion system assembly 54 includes the inlet structure 34, the fan cowls 36 (one fan cowl visible in FIG. 2) and the fan case 44. The propulsion system assembly 54 also includes a thermal anti-icing system 56.

The inlet structure 34 in FIG. 2 includes a tubular inner barrel 58, an annular inlet lip 60 (e.g., nose lip), a tubular outer barrel 62 and one or more annular bulkheads 64 and 66. The inlet structure 34 of FIG. 2 also configured with one or more components of the thermal anti-icing system 56.

The inner barrel 58 extends circumferentially around the axial centerline 28. The inner barrel 58 extends axially along the axial centerline 28 between an upstream, forward end 68 of the inner barrel 58 and a downstream, aft end 70 of the inner barrel 58. The inner barrel 58 may be configured to attenuate sound (e.g., noise) generated during operation of the aircraft propulsion system 20 and, more particularly for example, sound generated by rotation of the fan rotor within the fan section. The inner barrel 58 of FIG. 2, for example, includes at least one tubular acoustic panel 72 or an array of arcuate acoustic panels 72 arranged around the axial centerline 28. Each acoustic panel 72 may include a porous (e.g., honeycomb) core bonded to and radially between a perforated face sheet and a non-perforated back sheet, where the perforated face sheet faces radially inward and provides an outer peripheral boundary for an axial portion of the flowpath 46. Of course, various other acoustic panel types and configurations are known in the art, and the present disclosure is not limited to any particular ones thereof.

The inlet lip 60 forms a leading edge 74 of the nacelle 22 as well as the inlet opening 42 into the aircraft propulsion system 20 (see FIG. 1), where the leading edge 74 is located at the nacelle forward end 30. The inlet lip 60 has a cupped (e.g., generally U-shaped or V-shaped) cross-sectional geometry which extends circumferentially (e.g., completely) around the axial centerline 28. The inlet lip 60 includes an inner lip skin 76 and an outer lip skin 78, which inner lip skin 76 and outer lip skin 78 may be formed together from a generally contiguous sheet material. Examples of such sheet material include, but are not limited to, metal; e.g., aluminum (Al) or titanium (Ti) sheet metal.

The inner lip skin 76 extends axially from an intersection 80 with the outer lip skin 78 at the leading edge 74 to the inner barrel 58. An aft end 82 of the inner lip skin 76 is attached to the forward end 68 of the inner barrel 58 with, for example, one or more fasteners; e.g., rivets, bolts, etc. The present disclosure, however, is not limited to any particular attachment techniques between the inlet lip 60 and the inner barrel 58.

The outer lip skin 78 extends axially from the intersection 80 with the inner lip skin 76 at the leading edge 74 to the outer barrel 62.

The outer barrel 62 has a tubular outer barrel skin 84 that extends circumferentially around the axial centerline 28. The outer barrel skin 84 extends axially along the axial centerline 28 between the inlet lip 60 and, more particularly, the outer lip skin 78 and a downstream, aft end 86 of the outer barrel 62.

The outer barrel 62 and its outer barrel skin 84 may be formed integrally with the outer lip skin 78 and, more particularly, the entire inlet lip 60 as shown in FIG. 2. The inlet lip 60 and the outer barrel 62, for example, may be formed from a monolithic exterior skin such as, for example, a formed piece of sheet metal. Such a monolithic exterior skin may extend longitudinally from the aft end 82 of the inner lip skin 76 to the aft end 86 of the outer barrel 62. This monolithic exterior skin therefore integrally includes the inner lip skin 76, the outer lip skin 78 as well as the outer barrel skin 84. In such embodiments, the monolithic skin may be formed as a full hoop body, or circumferentially segmented into arcuate (e.g., circumferentially extending) bodies which are attached in a side-by-side fashion circumferentially about the axial centerline 28. The present disclosure, however, is not limited to such exemplary configurations. For example, in other embodiments, the inlet lip 60 may be formed discrete from the outer barrel 62 where the outer lip skin 78 is discrete from the outer barrel skin 84. In such embodiments, the outer lip skin 78 may meet the outer barrel skin 84 at an interface with the forward bulkhead 64 at, for example, a point 88.

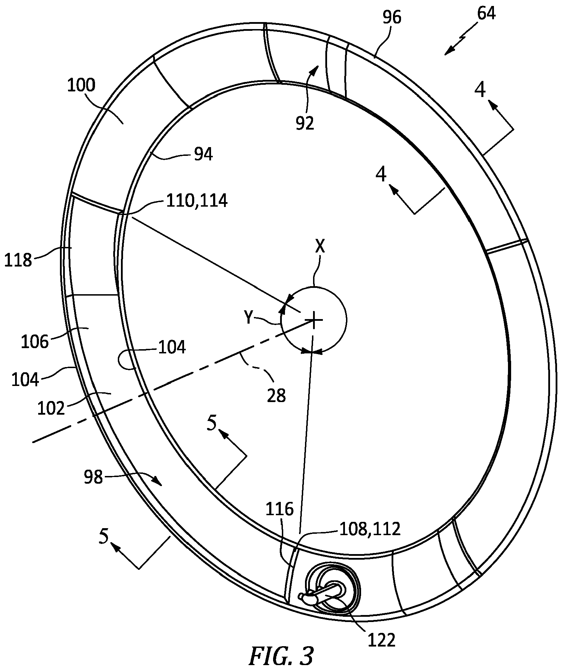

The forward bulkhead 64 is configured with the inlet lip 60 to form a forward internal cavity 90 (e.g., annular D-duct) within the inlet lip 60. The forward bulkhead 64 of FIG. 2, in particular, is axially located approximately at (e.g., proximate, adjacent or on) the aft end 82 of the inlet lip 60. The forward bulkhead 64 is configured as a substantially annular body that extends circumferentially about the axial centerline 28 (see also FIG. 3), which forward bulkhead 64 may be circumferentially continuous or circumferentially segmented. The forward bulkhead 64 is attached to and extends radially between the inner lip skin 76 and the outer lip skin 78. The forward bulkhead 64 may be mechanically fastened to the inlet lip 60 with one or more fasteners. The forward bulkhead 64 may also or alternatively be bonded and/or otherwise connected to the inlet lip 60. The forward bulkhead 64 may be formed from sheet material such as, but not limited to, aluminum or titanium sheet metal.

The forward bulkhead 64 of FIG. 2 includes a bulkhead wall 92, an inner bulkhead mount 94 (e.g., a flange, a rim, etc.) and an outer bulkhead mount 96 (e.g., a flange, a rim, etc.). Each of these bulkhead elements 92, 94 and 96 may extend circumferentially about (e.g., completely) around the axial centerline 28. The bulkhead wall 92 extends radially between and is connected to the inner bulkhead mount 94 and the outer bulkhead mount 96. The inner bulkhead mount 94 projects axially out from an inner end of the bulkhead wall 92; e.g., in an axially aft direction, away from the leading edge 74. This inner bulkhead mount 94 attaches the forward bulkhead 64 and its bulkhead wall 92 to the inner lip skin 76. The outer bulkhead mount 96 projects axially out from an outer end of the bulkhead wall 92; e.g., in the axially aft direction, away from the leading edge 74. This outer bulkhead mount 96 attaches the forward bulkhead 64 and its bulkhead wall 92 to the outer lip skin 78. With this arrangement, the bulkhead elements 92, 94 and 96 may provide the forward bulkhead 64 with a (e.g., generally C-shaped) channeled sectional geometry when viewed, for example, in a reference plane parallel with (e.g., including) the axial centerline 28.

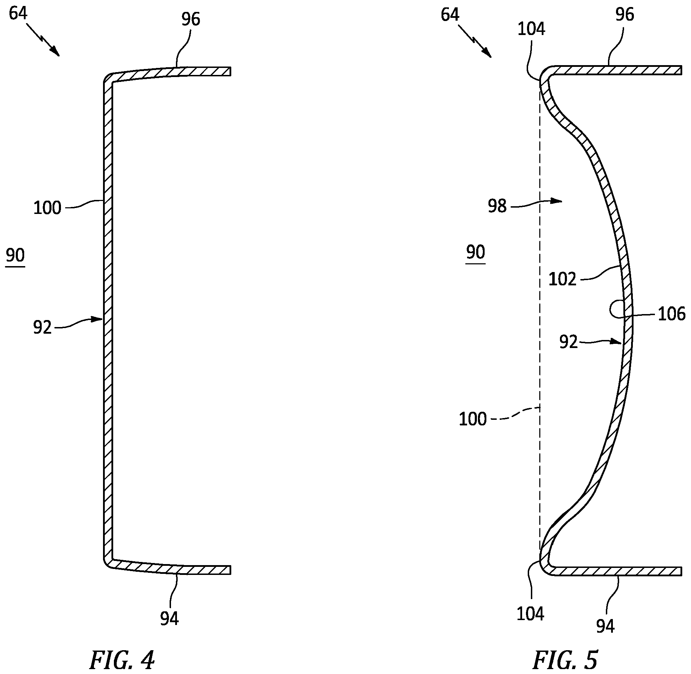

Referring to FIG. 3, the forward bulkhead 64 and its bulkhead wall 92 are configured with an axial recess 98; e.g., a channel, a pocket, a groove, etc. The bulkhead wall 92 of FIG. 3, for example, includes a plurality of circumferential sections 100 and 102 (e.g., bulkhead wall segments), where each circumferential section 100, 102 may extend radially between and to the inner bulkhead mount 94 and the outer bulkhead mount 96; see also FIGS. 4 and 5. Referring to FIG. 4, at least a portion or an entirety of the forward section 100 is disposed at an axial forward position along the axial centerline 28. Referring to FIG. 5, at least a portion or an entirety of the aft section 102 is disposed at an axial aft position along the axial centerline 28, which axial aft position is spaced axially aft of the axial forward position. The aft section 102 of FIG. 5, for example, has a concave sectional geometry with radial sides 104 at (or about) the axial forward position and a radial intermediate portion 106 (e.g., an apex) at the axial aft position. With this arrangement, the axial recess 98 of FIGS. 3 and 5 projects partially axially into the forward bulkhead 64 from the forward section 100 (at the circumferential ends 108 and 110 of the aft section 102) and from the radial sides 104 (at radial ends of the aft section 102) to the radial intermediate portion 106. The forward section 100 may have a slightly convex sectional geometry (e.g., see FIG. 2) or a straight sectional geometry (e.g., see FIG. 4).

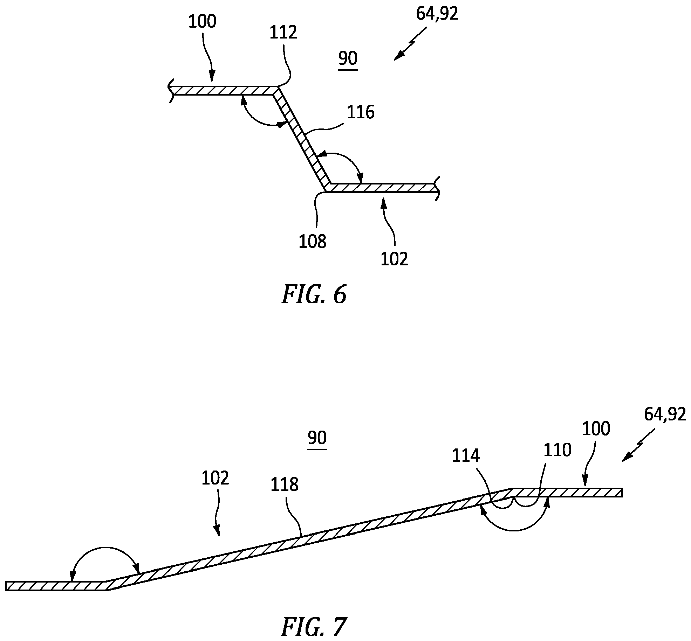

Referring to FIG. 3, the forward section 100 extends a first number (X) of degrees circumferentially about the axial centerline 28 between and to a circumferential first end 112 of the forward section 100 and a circumferential second end 114 of the forward section 100. The aft section 102 extends a second number (Y) of degrees circumferentially about the axial centerline 28 between and to the circumferential first end 108 of the aft section 102 and the circumferential second end 110 of the aft section 102. The aft section first end 108 may meet and may be connected to the forward section first end 112; see also FIG. 6. The aft section second end 110 may meet and may be connected to the forward section second end 114; see also FIG. 7.

The first number (X) of degrees and the second number (Y) of degrees are selected and may vary based on the specific application. However, in general, the first number (X) of degrees is greater than the second number (Y) of degrees. The second number (Y) of degrees, for example, may be between thirty degrees (30°) and one-hundred and twenty degrees (120°) and the first number (X) of degrees may be the remainder; e.g., three-hundred and sixty degrees (360°) minus the second number (Y) of degrees. More particularly, the second number (Y) of degrees may be between thirty degrees (30°) and sixty degrees (60°), between sixty degrees (60°) and ninety degrees (90°) or between ninety degrees (90°) and one-hundred and twenty degrees (120°). The present disclosure, however, is not limited to the foregoing exemplary relationship between the forward and aft section circumferential dimensions.

Referring to FIG. 6, the aft section 102 may meet the forward section 100 through a stepped transition at the first ends 108 and 112. The forward bulkhead 64 of FIG. 6, for example, includes an axial step between the aft section first end 108 and the forward section first end 112. More particularly, a portion 116 of the bulkhead wall 92 (e.g., an axial jog, a shelf, etc.) extends radially between and to the aft section first end 108 and the forward section first end 112. This portion 116 of the bulkhead wall 92 may be angularly offset from a circumferentially adjacent portion of the bulkhead wall 92 in the forward section 100 by a right angle or a shallow obtuse angle; e.g., an angle between ninety degrees (90°) and one-hundred degrees (100°). The portion 116 of the bulkhead wall 92 may also or alternatively be angularly offset from a circumferentially adjacent portion of the bulkhead wall 92 in the aft section 102 by a right angle or a shallow obtuse angle; e.g., an angle between ninety degrees (90°) and one-hundred degrees (100°). However, in other embodiments, the portions may be angularly offset by a larger obtuse angle; e.g., between one-hundred degrees (100°) and one-hundred and twenty degrees (120°), between one-hundred and twenty degrees (120°) and one-hundred and fifty degrees (150°), etc. In such embodiments, the portion 116 may provide a taper as described below with respect to FIG. 7 below.

Referring to FIG. 7, the aft section 102 may meet the forward section 100 through a gradual (e.g., tapered) transition at the second ends 110 and 114. A portion 118 of the aft section 102 (e.g., a ramp) at the aft section second end 110, for example, may gradually (e.g., continuously) converge axially to the forward section second end 114. This aft section portion 118 may be angularly offset from a circumferentially adjacent portion of the bulkhead wall 92 in the forward section 100 by an obtuse angle; e.g., less than one-hundred and eighty degrees (180°) and greater than one-hundred and one-hundred and twenty (120°) or one-hundred and fifty degrees (150°). This aft section portion 118 may account for between five percent (5%) and thirty percent (30%) of a circumferential length of the aft section 102. However, in other embodiments, the aft section portion 118 may account for more than thirty percent (30%) of the circumferential length of the aft section 102.

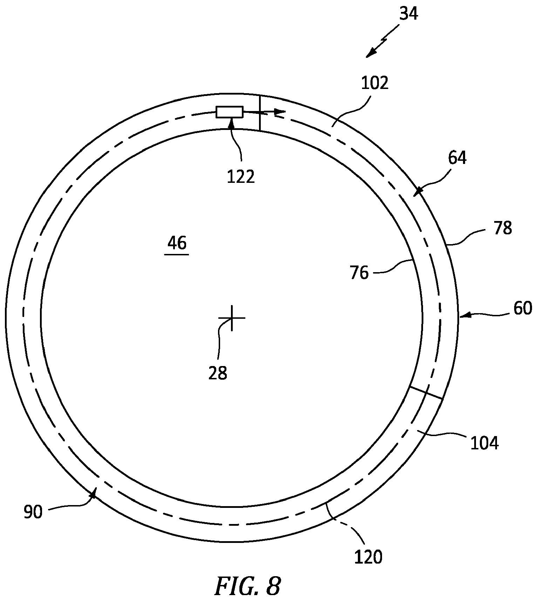

Referring to FIG. 2, the cavity 90 extends axially within the inlet lip 60 from a forward end of the inlet lip 60 (e.g., at the intersection 80) to the forward bulkhead 64 and its circumferential sections 100 and 102; see also FIGS. 4 and 5. The cavity 90 extends radially within the inlet lip 60 from the inner lip skin 76 to the outer lip skin 78. Referring to FIG. 8, the cavity 90 also extends circumferentially about (e.g., completely around) the axial centerline 28. More particularly, the cavity 90 of FIG. 8 extends along a curvilinear centerline 120 of the cavity 90 within the inlet lip 60, which curvilinear centerline 120 extends circumferentially about the axial centerline 28.

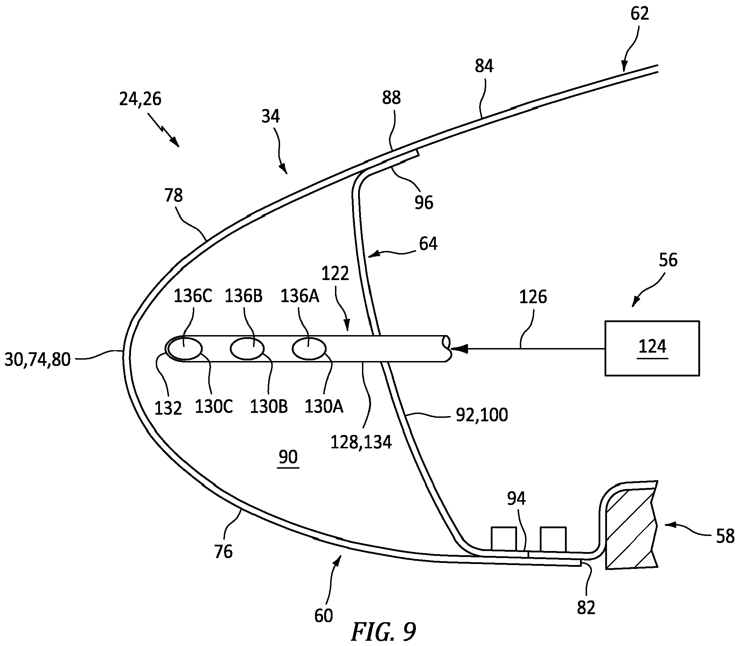

Referring to FIG. 9, the thermal anti-icing system 56 is configured to melt and/or prevent ice accumulation on an exterior surface of an exterior skin of the inlet structure 34; e.g., exterior surfaces of the inner lip skin 76 and/or the outer lip skin 78. The thermal anti-icing system 56 of FIG. 9 includes at least one nozzle 122, a gas source 124 and a supply conduit 126 for directing / routing gas (e.g., relatively hot compressed bleed air) from the gas source 124 to the nozzle 122. The gas source 124 may be configured as a compressor section (e.g., a high pressure compressor (HPC) section or a low pressure compressor (LPC) section) of the gas turbine engine.

The nozzle 122 is arranged at least partially (or completely) within the cavity 90. The nozzle 122 of FIG. 9, for example, projects generally axially along the axial centerline 28 (see FIG. 2) into the cavity 90 from the forward bulkhead 64 and its forward section 100. Referring to FIG. 3, the nozzle 122 is arranged circumferentially at or near the aft section first end 108. Referring to FIG. 8, the nozzle 122 is configured to inject the gas received from the gas source 124 (see FIG. 9) into the cavity 90 in a general lateral direction; e.g., in a direction approximately tangential to the curvilinear centerline 120.

The nozzle 122 of FIG. 9 includes a conduit 128 (e.g., a trunk) and one or more nozzle ports 130A-C (generally referred to as 130) for injecting the gas into the cavity 90.

The conduit 128 may be mounted to the forward bulkhead 64 and its forward section 100. The conduit 128 has a tubular body, and projects longitudinally (e.g., parallel with the axial centerline 28) along a longitudinal centerline of the conduit 128 out from the forward bulkhead 64 and its forward section 100 to a (e.g., closed, capped) distal end 132 of the conduit 128.

The nozzle ports 130 are arranged longitudinally along the conduit 128 in a linear array. The nozzle ports 130 may thereby be disposed at different longitudinal (e.g., axial) locations along the conduit 128. Each of the nozzle ports 130 is connected to a tubular sidewall 134 of the conduit 128. Each of the nozzle ports 130A, 130B, 130C includes a nozzle orifice 136A, 136B, 136C (generally referred to as 136). Each nozzle port 130 and, more particularly, its nozzle orifice 136 is fluidly coupled with an internal bore of the conduit 128.

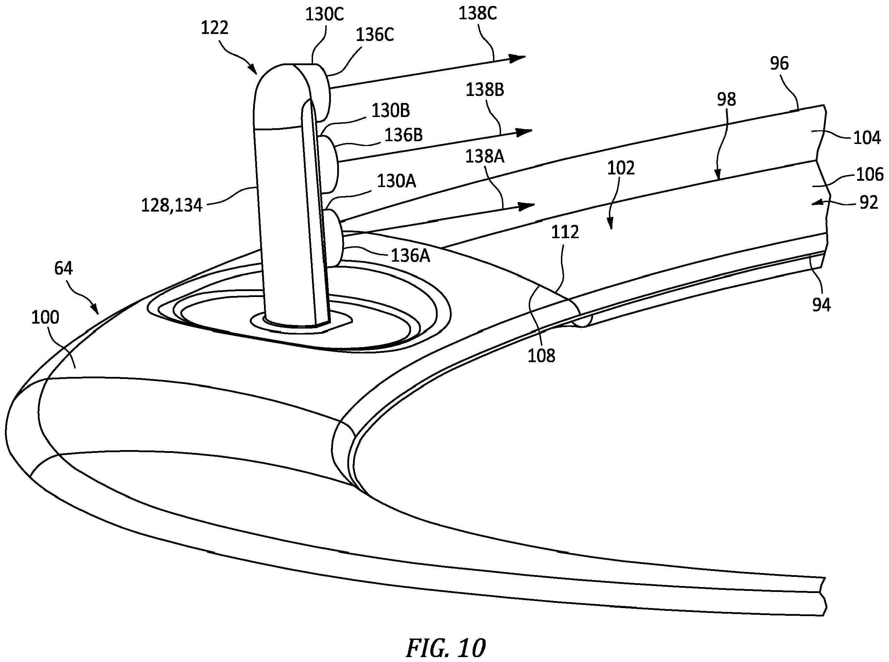

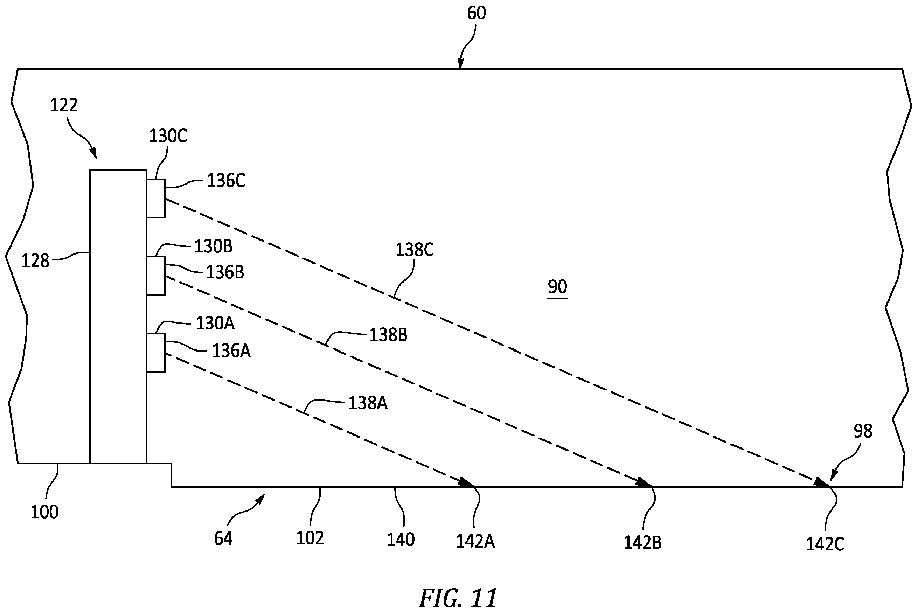

Each nozzle port 130 is adapted to direct a respective portion of the gas received from the gas source 124 through the conduit 128 and its internal bore into the cavity 90 as a stream (e.g., a jet) of the gas. Referring to FIG. 10, each nozzle port 130A, 130B, 130C directs the gas stream into the cavity 90 through the nozzle orifice 136A, 136B, 136C along a trajectory 138A, 138B, 138C (generally referred to as 138). This trajectory 138 is aimed towards the forward bulkhead 64 and its aft section 102 (see also FIG. 11). More particularly, the trajectory 138 includes a lateral component and an axial component towards the forward bulkhead 64. Referring to FIG. 11, the trajectory 138 (if extended away from the nozzle 122) may thereby be coincident with (e.g., intersect) a bulkhead plane 140 defined by the forward bulkhead 64, which plane 140 may be perpendicular to the axial centerline 28 (see FIGS. 1 and 2). Depending upon the axial component of the trajectory 138, the trajectory 138 may also be coincident with the forward bulkhead 64 itself and its aft section 102.

With the nozzle arrangement of FIG. 9, the relatively hot gas is directed into the cavity 90 generally axially away from the inlet lip 60 and its lip skins 76 and 78. This injected gas therefore does not (or is less likely to) directly interact with (e.g., impinge against) the inlet lip 60 and its lip skins 76 and 78 prior to mixing with colder (but still warm) gas already circulating within the cavity 90. Directing the relatively hot gas into the cavity 90 towards the bulkhead plane 140 (see FIG. 11) / the forward bulkhead 64 may thereby reduce or eliminate formation of a hot spot along the inlet lip 60 and its lip skins 76 and 78. Furthermore, providing the forward bulkhead 64 with the axial recess 98 (see FIGS. 3, 10 and 11) may prevent (or reduce likelihood of) the injected stream of gas from impinging (e.g., hard) against the forward bulkhead 64 and ricocheting towards and impinging against the inlet lip 60 and its lip skins 76 and 78. This further reduces or eliminates formation of the hot spot along the inlet lip 60 and its lip skins 76 and 78. More particularly, axially recessing the aft section 102 from the forward section 100 of the forward bulkhead 64 provides additional room for the already circulating gas to interact (e.g., mix, push, etc.) with the injected gas. The relatively hot injected gas may thereby flow (e.g., glide) over the forward bulkhead 64 without losing much velocity. By contrast, relatively hot gas directed out of a nozzle parallel to a bulkhead may be pushed against a lip skin by already circulating cavity air thereby generating a hot spot on the lip skin. Such a hot spot may degrade material of the lip skin and lead to premature degradation of the lip skin, or require use of higher temperature materials and/or thicker materials for the lip skin which may increase cost and weight of the inlet structure.

In some embodiments, referring to FIG. 11, the nozzle ports 130 may be configured to direct the gas streams along parallel trajectories 138. The nozzle ports 130 may also or alternatively be configured to direct the gas streams to different circumferential target locations 142A, 142B, 142C (generally referred to as 142). Each trajectory 138A, 138B, 138C (if extended away from the nozzle 122) of FIG. 11, for example, may be coincident with a different lateral / circumferential target location along the bulkhead plane 140. These target locations 142 may be disposed at different lateral / circumferential distances from the nozzle 122. The present disclosure, however, is not limited to such exemplary embodiments. For example, in other embodiments, the trajectories 138 may be slightly angularly offset from one another and/or the trajectories 138 may be aimed to a common (e.g., the same) circumferential target location 142.

The nozzle 122 may have a linear multi-port (e.g., three port) configuration as described above. However, various other types of nozzle configurations are known in the art, and the present disclosure is not limited to any particular ones thereof. More particularly, the nozzle 122 may have any arrangement of one or more nozzle ports configured, for example, to aim the injected gas stream axially towards the forward bulkhead 64.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly (54) for an aircraft propulsion system (20), comprising:
a nacelle inlet structure (34) extending circumferentially about an axial centerline (28), the nacelle inlet structure (34) including an inlet lip (60), a bulkhead (64) and an internal cavity (90) formed by and axially between the inlet lip (60) and the bulkhead (64); and
a nozzle (122) configured to direct gas into the internal cavity (90) axially towards the bulkhead (64).

2. The assembly (54) of claim 1, wherein:
the nozzle (122) comprises a nozzle port (130A) with a nozzle orifice (136A); and
the nozzle port (130A) is configured to direct a stream of the gas into the internal cavity (90) through the nozzle orifice (136A) along a trajectory (138A) that is coincident with a bulkhead plane (140) defined by the bulkhead (64).

3. The assembly (54) of claim 2, wherein:
the nozzle (122) further comprises a second nozzle port (130B) with a second nozzle orifice (136B); and
the second nozzle port (130B) is configured to direct a second stream of the gas into the internal cavity (90) through the second nozzle orifice (136B) along a second trajectory (138B) that is coincident with the bulkhead plane (140), and, optionally, the second trajectory (138B) is parallel with the trajectory (13 8A).

4. The assembly (54) of claim 3, wherein:
the trajectory (138A) is coincident with the bulkhead plane (140) at a first location (142A) a first distance from the nozzle (122); and
the second trajectory (138B) is coincident with the bulkhead plane (140) at a second location (142B) a second distance from the nozzle that is different than the first distance.

5. The assembly (54) of claim 3 or 4, wherein:
the nozzle (122) further comprises a conduit (128) projecting longitudinally along a longitudinal centerline out from the bulkhead (64) into the internal cavity (90); and
the nozzle port (130A) and the second nozzle port (130B) are disposed at different locations longitudinally along the conduit (128).

6. The assembly (54) of claim 3, 4 or 5, wherein:
the nozzle (122) further comprises a third nozzle port (130C) with a third nozzle orifice (136C); and
the third nozzle port (130C) is configured to direct a third stream of the gas into the internal cavity (90) through the third nozzle orifice (136C) along a third trajectory (138C) that is coincident with the bulkhead plane (140).

7. The assembly (54) of any preceding claim, wherein:
the nozzle (122) comprises a nozzle port (130A) with a nozzle orifice (136A); and
the nozzle port (130A) is configured to aim a stream of the gas directed into the internal cavity (90) through the nozzle orifice (136A) axially towards the bulkhead (64).

8. The assembly (54) of any preceding claim, wherein:
the bulkhead (64) comprises an axial recess (98); and
the nozzle (122) is configured to direct the gas into the internal cavity (90) along a trajectory (138A) coincident with the axial recess (98).

9. The assembly (54) of claim 8, wherein:
the axial recess (98) is circumferentially spaced from the nozzle (122); and/or
the axial recess (98) extends partially circumferentially about the axial centerline (28) between a circumferential first end (108) and a circumferential second end (110).

10. The assembly (54) of claim 8 or 9, wherein:
the bulkhead (64) has an axial step (116) at a circumferential end (108) of the axial recess (98); and/or
the bulkhead (64) has an axial taper (118) at a circumferential end (110) of the axial recess (98).

11. The assembly (54) of any preceding claim, wherein:
the bulkhead (64) comprises a first section (100), a second section (102) and a pocket (98);
the second section (102) extends circumferentially about the axial centerline (28) between opposing ends (112, 114) of the first section (100); and
the pocket (98) extends axially into the bulkhead (64) from the first section (100) to the second section (102).

12. The assembly (54) of any preceding claim, wherein:
the inlet lip (60) includes an inner lip skin (76) and an outer lip skin (78); and
the internal cavity (90) extends axially along the axial centerline (28) between a forward end of the inlet lip (60) and the bulkhead (64), the internal cavity (90) extends radially between the inner lip skin (76) and the outer lip skin (78), and the internal cavity (90) extends circumferentially about the axial centerline (28).

13. An assembly (54) for an aircraft propulsion system (20), comprising:
a nacelle inlet structure (34) extending circumferentially about an axial centerline (28), the nacelle inlet structure (34) including an inlet lip (60), a bulkhead (64) and an internal cavity (90) formed by and axially between the inlet lip (60) and the bulkhead (64), the bulkhead (64) including a forward section (100) and an aft section (102), the forward section (100) located axially between a leading edge (74) of the inlet lip (60) and the aft section (102), and the aft section (102) extending circumferentially about the axial centerline (28) between opposing circumferential ends (112, 114) of the forward section (100); and
a nozzle (122) configured to direct gas into the internal cavity (90).

14. The assembly (54) of claim 13, wherein:
a recess (98) extends axially into the bulkhead (64) from the forward section (100) to the aft section (102); and/or
the nozzle (122) is configured to direct the gas into the internal cavity (90) along a trajectory (138) aimed axially towards the aft section (102); and/or
the bulkhead (64) includes a stepped transition (116) between the aft section (102) and the forward section (100) at a circumferential first end (108) of the aft section (102), and a sloped transition (118) between the aft section (102) and the forward section (100) at a circumferential second end (110) of the aft section (102).

15. An assembly (54) for an aircraft propulsion system (20), comprising:
an inlet lip (60) extending circumferentially about an axial centerline (28);
a bulkhead (64) extending circumferentially about the axial centerline (28), the bulkhead (64) configured with the inlet lip (60) to form an internal cavity (90) axially between the inlet lip (60) and the bulkhead (64), and a recess (98) projecting axially into the bulkhead (64) away from the inlet lip (90); and
a thermal anti-icing system (56) comprising a nozzle (122) configured to direct a stream of gas into the internal cavity (90) along a trajectory (138) aimed axially towards the recess (98).
